# EUROPEAN PATENT APPLICATION

(11) **EP 1 862 285 A1**
(43) Date of publication of application: **05.12.2007**
(21) Application number: 06729783.8
(22) Date of filing: 23.03.2006
(51) Int. Cl.: B29C 33/22, B29C 45/66

(54) **VERTICAL MOLDING MACHINE AND MOLDING METHOD THEREFOR**

(30) Priority: 24.03.2005 JP 2005085193
(71) Applicant: SUMITOMO HEAVY INDUSTRIES, LTD., Shinagawa-ku, Tokyo 141-8686 (JP)
(72) Inventor: SHIMOKAWA, Tatsuhiko, SUMITOMO HEAVY IND., LTD., Chiba-shi, Chiba 263-0001 (JP)
(74) Representative: Wagner, Karl H.
(86) International application number: PCT/JP2006/305816
(87) International publication number: WO 2006/101165

(57) **Abstract**

The present invention provides a vertical molding machine whose mechanisms can be simplified and whose cost can be lowered. The vertical molding machine includes a frame; an upper platen (31) fixed to the frame and having an upper mold (41) mounted thereon; a connection member disposed in such a manner as to extend downward from the upper platen (31); a lower base member held by the connection member under the upper platen (31); a lower platen (35) disposed in a manner capable of advancing and retreating along the connection member and having a lower mold mounted thereon; and a mold-clamping drive section which advances and retreats the lower platen (35) so as to bring the lower mold in contact with the upper mold (41) or move the lower mold away from the upper mold (41) for effecting mold closing, mold clamping, and mold opening. The lower base member is moved downward by a mold-clamping force generated by the drive section at the time of mold clamping. Since the lower platen (35) is advanced and retreated so as to bring the lower mold in contact with the upper mold (41) or move the lower mold away from the upper mold (41) for effecting mold closing, mold clamping, and mold opening, there is no need to move an injection apparatus in a vertical direction.

## Description

### TECHNICAL FIELD

The present invention relates to a vertical molding machine and a molding method for use therewith.

### BACKGROUND ART

Conventionally, in a molding machine; for example, an injection molding machine, a resin is melted within a heating cylinder through application of heat; molten resin is injected under high pressure into a cavity of a mold apparatus so as to fill the cavity; and the resin within the cavity is cooled to set, thereby yielding a molded product.

A vertical-type injection molding machine; i.e., a vertical molding machine, has a mold apparatus, a mold-clamping apparatus, and an injection apparatus. The mold apparatus has a fixed lower mold and an upper mold, which is disposed to be movable in a vertical direction. The mold-clamping apparatus' includes a fixed lower platen; an upper platen, which is disposed to be movable in a vertical direction; and a mold-clamping motor. The mold-clamping motor is driven so as to advance and retreat the upper platen, thereby effecting mold closing, mold clamping, and mold opening. As a result of mold clamping, a cavity is formed between the lower mold and the upper mold.

The injection apparatus includes a heating cylinder for melting a resin supplied from a hopper, through application of heat; an injection nozzle for injecting the molten resin; a metering motor; and an injection motor. A screw is disposed within the heating cylinder rotatably and in a manner capable of advancing and retreating. By means of driving the metering motor so as to retreat the screw while rotating the screw, the resin is stored ahead of the screw. By means of driving the injection motor so as to advance the screw, the resin is injected into the cavity from the injection nozzle and fills the cavity (refer to, for example,
Patent Document 1).
Patent Document 1: Japanese Patent Application Laid-Open (kokai) No. H8-103958

### DISCLOSURE OF THE INVENTION

### PROBLEMS TO BE SOLVED BY THE INVENTION

However, in the conventional vertical molding machine, in association with vertical movement of the upper platen, the injection apparatus must be moved in a vertical direction. This results in complication of a mechanism for such movement, in turn resulting in an increase in the cost of the vertical molding machine.

Also, since the injection apparatus must be disposed on the upper platen, the size of the vertical molding machine increases.

An object of the present invention is to solve the above-mentioned problems in the conventional vertical molding machine and to provide a vertical molding machine whose mechanisms can be simplified, whose cost can be lowered, and whose size can be reduced; as well as to provide a molding method for use therewith.

### MEANS FOR SOLVING THE PROBLEMS

To achieve the above object, a vertical molding machine of the present invention comprises a frame; an upper platen fixed to the frame and having an upper mold mounted thereon; a connection member disposed in such a manner as to extend downward from the upper platen; a lower base member held by the connection member under the upper platen; a lower platen disposed in a manner capable of advancing and retreating along the connection member, and having a lower mold mounted thereon; and a mold-clamping drive section which advances and retreats the lower platen so as to bring the lower mold in contact with the upper mold or move the lower mold away from the upper mold for effecting mold closing, mold clamping, and mold opening.

The lower base member is moved downward by a mold-clamping force generated by the drive section at the time of mold clamping.

### EFFECT OF THE INVENTION

According to the present invention, the vertical molding machine comprises a frame; an upper platen fixed to the frame and having an upper mold mounted thereon; a connection member disposed in such a manner as to extend downward from the upper platen; a lower base member held by the connection member under the upper platen; a lower platen disposed in a manner capable of advancing and retreating along the connection member, and having a lower mold mounted thereon; and a mold-clamping drive section which advances and retreats the lower platen so as to bring the lower mold in contact with the upper mold or move the lower mold away from the upper mold for effecting mold closing, mold clamping, and mold opening.

The lower base member is moved downward by a mold-clamping force generated by the drive section at the time of mold clamping.

In this case, since the lower platen is advanced and retreated so as to bring the lower mold in contact with the upper mold or move the lower mold away from the upper mold for effecting mold closing, mold clamping, and mold opening, there is no need to move an injection apparatus in a vertical direction. Accordingly, the mechanisms of the vertical molding machine can be simplified, and the cost of the vertical molding machine can be lowered.

Since there is no need to dispose the injection apparatus on the upper platen, the size of the vertical molding machine can be reduced.

### BRIEF DESCRIPTION OF THE DRAWINGS

[FIG. 1] Rear view showing essential portions of a vertical molding machine according to an embodiment of the present invention.
[FIG. 2] Plan view of the vertical molding machine according to the embodiment of the present invention.
[FIG. 3] Front view of the vertical molding machine according to the embodiment of the present invention.
[FIG. 4] Side view of the vertical molding machine according to the embodiment of the present invention.
[FIG. 5] Side view showing essential portions of the vertical molding machine according to the embodiment of the present invention.
[FIG. 6] Plan view showing essential portions of the vertical molding machine according to the embodiment of the present invention.
[FIG. 7] Enlarged view showing a transmission mechanism in the embodiment of the present invention.

### DESCRIPTION OF REFERENCE NUMERALS

11: frame
21: injection apparatus
22: mold apparatus
23: mold-clamping apparatus
31: upper platen
32: toggle support
34: tie bar
35: lower platen
38: mold-clamping motor
41: upper mold
43: lower mold

### BEST MODE FOR CARRYING OUT THE INVENTION

An embodiment of the present invention will next be described in detail with reference to the drawings. In this case, a vertical molding machine of an injection molding type, which is an example molding machine, will be described.

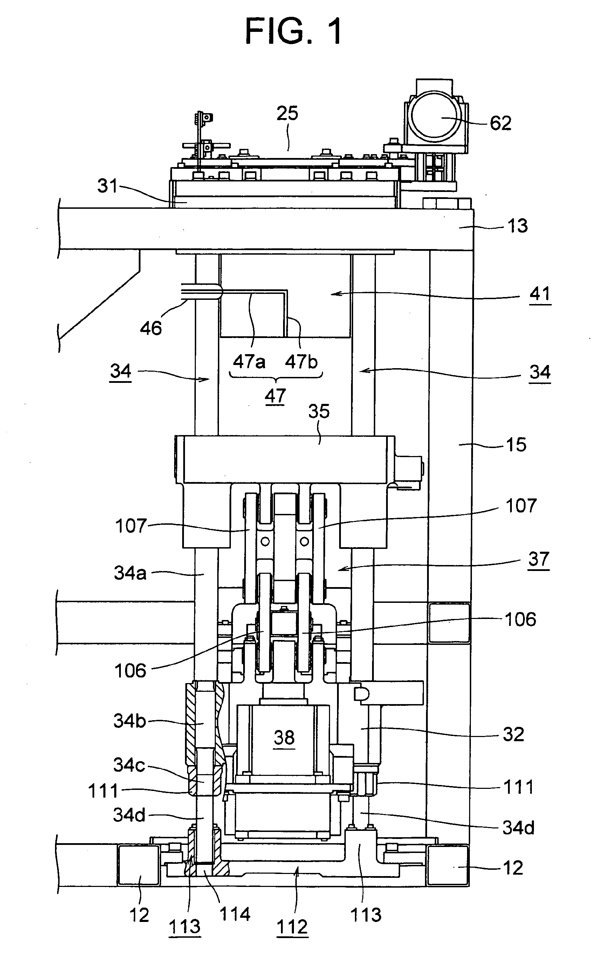

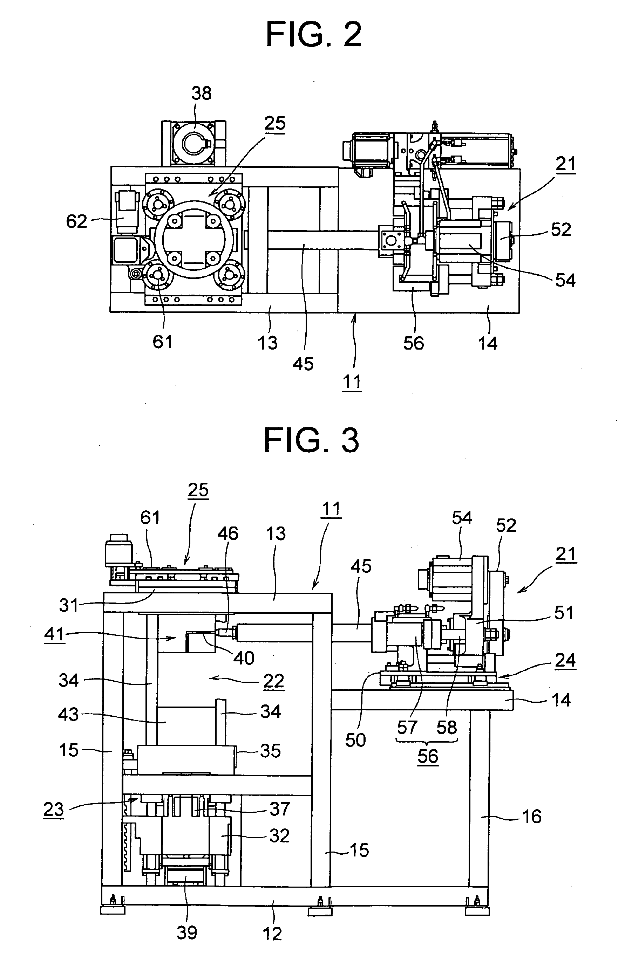

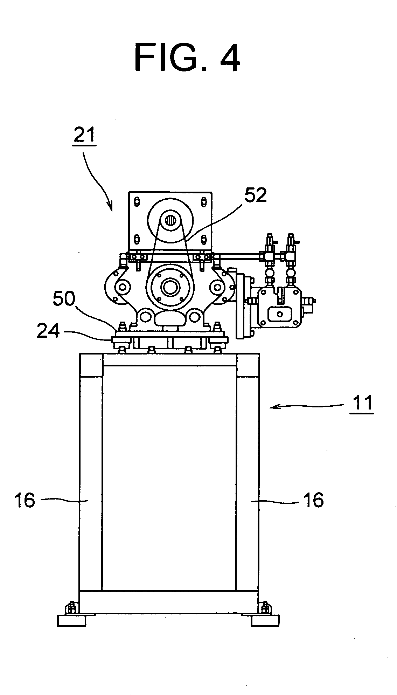

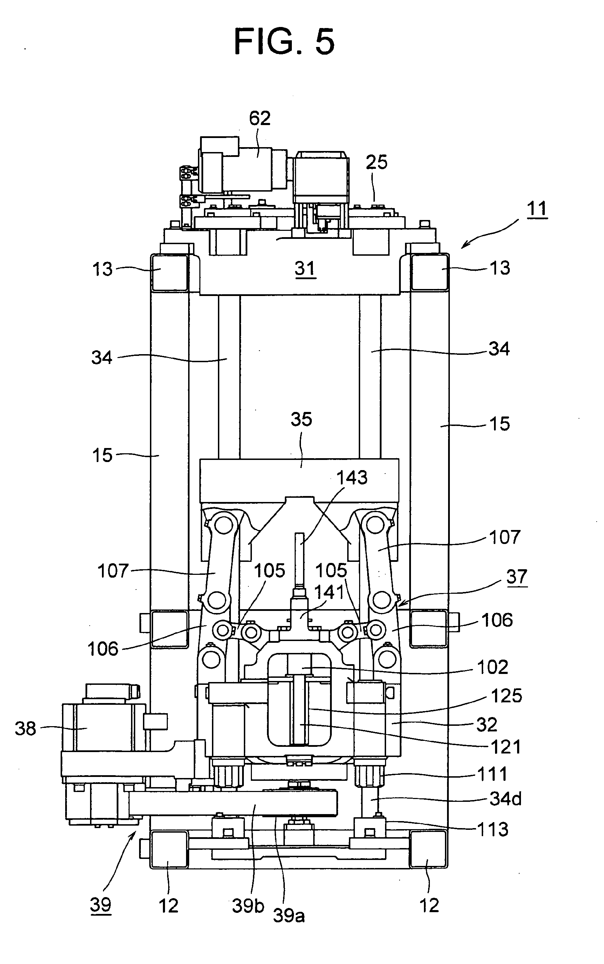

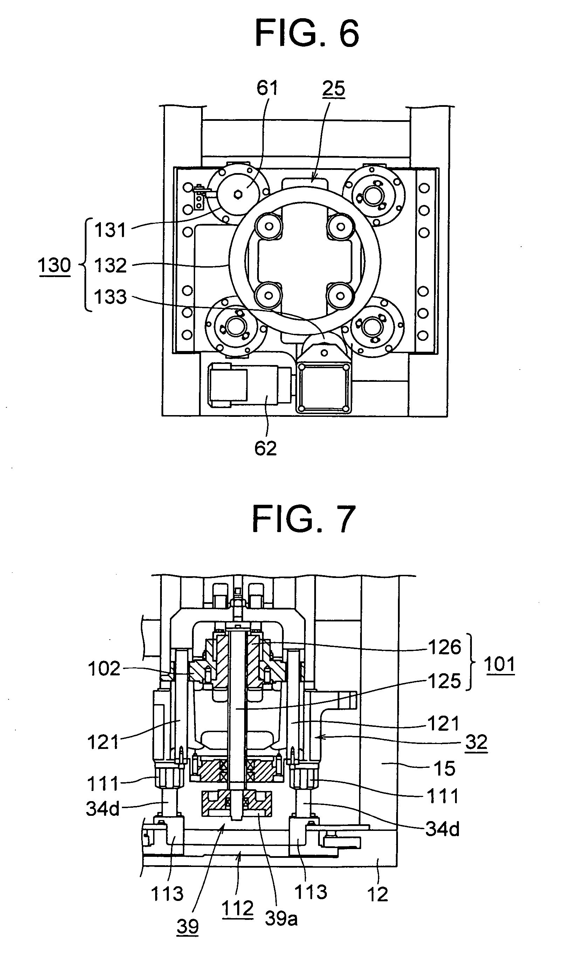

FIG. 1 is a rear view showing essential portions of a vertical molding machine according to the embodiment of the present invention; FIG. 2 is a plan view of the vertical molding machine according to the embodiment of the present invention; FIG. 3 is a front view of the vertical molding machine according to the embodiment of the present invention; FIG. 4 is a side view of the vertical molding machine according to the embodiment of the present invention; FIG. 5 is a side view showing essential portions of the vertical molding machine according to the embodiment of the present invention; FIG. 6 is a plan view showing essential portions of the vertical molding machine according to the embodiment of the present invention; and FIG. 7 is an enlarged view showing a transmission mechanism in the embodiment of the present invention.

In the drawings, reference numeral 11 denotes a frame in which the vertical molding machine is installed. The frame 11 includes a base 12; an upper frame 13, which has a rectangular shape, is disposed a predetermined distance apart from the base 12, and serves as a first upper member; a table 14, which has a rectangular shape, is disposed adjacent to the upper frame 13 at a level lower than the upper frame 13, and serves as a second upper member; a plurality of first supports 15, which are disposed vertically between the base 12 and the upper frame 13 and support the upper frame 13; and a plurality of second supports 16, which are disposed vertically between the base 12 and the table 14 and support the table 14.

The frame 11 carries an injection apparatus 21; a mold apparatus 22 disposed frontward of the injection apparatus 21; a mold-clamping apparatus 23; a plastifying-and-moving apparatus 24, which supports the injection apparatus 21 such that the injection apparatus 21 can advance and retreat; and a mold-thickness-adjusting apparatus 25. The mold-clamping apparatus 23 includes an upper platen 31, which is attached to the upper frame 13 and fixed in relation to the frame 11, and serves as a fixed member and as a stationary platen; a toggle support 32, which is disposed under the upper platen 31 and serves as a lower base member; a plurality of tie bars 34, which are disposed in such a manner as to extend downward from the upper platen 31, connect the upper platen 31 and the toggle support 32, hold the toggle support 32 such that the toggle support 32 is suspended, and serve collectively as a connection member; a lower platen 35, which is disposed in such a manner as to be vertically movable along the tie bars 34, and serves as a movable member and as a movable platen; a toggle mechanism 37 disposed between the toggle support 32 and the lower platen 35; a mold-clamping motor 38, which serves as a mold-clamping drive section; a pulley-and-belt-type rotation transmission system (composed of a drive pulley, which serves as a drive element, a follower pulley 39a, which serves as a follower element, and a timing belt 39b, which serves as a transmission member and extends between the drive pulley and the follower pulley 39a) 39 for transmitting, to the toggle mechanism 37, rotation generated by driving of the mold-clamping motor 38; a ball screw 101 coupled with the rotation transmission system 39; and a crosshead 102, which is coupled with the ball screw 101 and advances and retreats in association with rotation of the ball screw 101.

The ball screw 101 functions as a motion-direction conversion section for converting a rotary motion to a rectilinear motion. In order to yield this function, the ball screw 101 is coupled with the rotation transmission system 39 and includes a ball screw shaft 125, which serves as a first conversion element and is disposed rotatably in relation to the toggle support 32, and a ball nut 126, which serves as a second conversion element, is attached to the crosshead 102, and is in screw-engaged with the ball screw shaft 125. The toggle support 32 has guide rods 121, which extend upward through the crosshead 102. Accordingly, rotation of the ball screw shaft 125 causes the ball nut 126 to advance and retreat, thereby causing the crosshead 102 to advance and retreat along the guide rods 121.

An upper mold 41, which serves as a first mold and as a stationary mold, is attached to the upper platen 31; a lower mold 43, which serves as a second mold and as a movable mold, is attached to the lower platen 35 in such a manner as to face the upper mold 41; and the upper mold 41 and the lower mold 43 constitute the mold apparatus 22. A hot runner 47 is disposed in the upper mold 41; has a hot runner structure; and includes a first runner portion 47a, which opens at the side face of the upper mold 41 and extends horizontally, and a second runner portion 47b, which extends downward from an end of the first runner portion 47a and opens into a cavity. Thus, an adapter having a shape resembling the letter "L" is disposed within the hot runner 47. In this case, since a resin, which serves as a molding material, can be purged from the upper mold 41, there is no need to retreat the injection apparatus 21 when purging is to be performed. Therefore, purging work can be simplified.

In the present embodiment, the upper platen 31 is attached to the upper frame 13; the tie bars 34 are fixed, at their upper ends, to the upper platen 31 and extend downward; and the tie bars 34 hold the toggle support 32, the lower platen 35, and the toggle mechanism 37 under the upper platen 31 such that these members hang on the tie bars 34. Thus, each of the tie bars 34 includes an unillustrated first threaded portion, which is located at an upper end of the tie bar 34 and is in screw-engaged with an adjusting nut 61, which serves as a mold-thickness-adjusting member; a slide portion 34a, which extends downward from the first threaded portion and serves as a first rod portion and along which the lower platen 35 slides; a holding portion 34b, which extends downward from the slide portion 34a and through the toggle support 32 and serves as a second rod portion; a second threaded portion 34c, which extends downward from the holding portion 34b and is in screw-engaged with a nut 111; and a deflection-restricted portion 34d, which extends downward from the second threaded portion 34c. The holding portion 34b is smaller in diameter than the slide portion 34b. The second threaded portion 34c and the deflection-restricted portion 34d are smaller in diameter than the holding portion 34b. While the upper end of the toggle support 32 is brought in contact with the shoulders between the slide portions 34a and the holding portions 34b, the nuts 111 and the corresponding threaded portions 34c are in screw-engaged together, whereby the toggle support 32 can be fixed to portions of the tie bars 34 in the vicinity of the lower ends of the tie bars 34.

The toggle mechanism 37 includes toggle levers 105, which are supported pivotably in relation to the crosshead 102; toggle levers 106, which are supported pivotably in relation to the toggle support 32; and toggle arms 107, which are supported pivotably in relation to the lower platen 35. The toggle levers 105 and 106 are linked together, and the toggle levers 106 and the toggle arms 107 are linked together.

When the crosshead 102 is advanced and retreated between the toggle support 32 and the lower platen 35 by driving of the mold-clamping motor 38, the toggle mechanism 37 is bent and extended, thereby causing the lower platen 35 to advance and retreat along the tie bars 34. As a result, the lower mold 43 can be brought in contact with and moved away from the upper mold 41, thereby effecting mold closing, mold clamping, and mold opening. Notably, a mold-clamping force generated by the mold-clamping motor 38 at the time of mold clamping causes the tie bars 34 to lengthen, whereby the toggle support 32 is moved downward.

The injection apparatus 21 includes a heating cylinder 45, which serves as a cylinder member; an unillustrated screw, which serves as an injection member and is disposed within the heating cylinder 45 rotatably and in a manner capable of advancing and retreating; an injection nozzle 46 attached to a front end of the heating cylinder 45; an unillustrated hopper disposed in the vicinity of a rear end of the heating cylinder 45; an unillustrated screw shaft projecting from a rear end of the screw; a pressure plate 51, which serves as a pressure member, is disposed in a manner capable of advancing and retreating, and rotatably supports the screw; a metering motor 54, which serves as a metering drive section, is attached to the pressure plate 51, and is connected to the screw shaft via a pulley-and-belt-type rotation transmission system (composed of a drive pulley, which serves as a drive element, a follower pulley, which serves as a follower element, and a timing belt, which serves as a transmission member and extends between the drive pulley and the follower pulley) 52; and a pair of injection cylinders 56, which are attached to a frame 50 of the plastifying-and-moving apparatus 24, are connected to the pressure plate 51, and serve collectively as an injection drive section. Each of the injection cylinders 56 includes a cylinder portion 57 and a piston 58, which extends rearward from the cylinder portion 57. Ends of the pistons 58 are connected to the pressure plate 51.

The mold-thickness-adjusting apparatus 25 includes adjusting nuts 61, which are in screw-engaged with the corresponding first threaded portions formed at the upper ends of the tie bars 34; a mold-thickness motor 62, which serves as a mold-thickness-adjusting drive section; and a gear mechanism 130, which serves as a transmission member and transmits rotation generated by driving of the mold-thickness motor 62 to the adjusting nuts 61. The mold-thickness-adjusting apparatus 25 causes the toggle support 32 to advance and retreat in relation to the upper platen 31. Thus, the gear mechanism 130 includes small-diameter gears 131 disposed on the outer circumferences of the adjusting nuts 61; a large-diameter gear 132 meshed with the small-diameter gears 131; and a drive gear 133 meshed with the large-diameter gear 132. Rotation generated by driving of the mold-thickness motor 62 is transmitted from the drive gear 133 to the large-diameter gear 132 and further to the small-diameter gears 131, thereby rotating the adjusting nuts 61 by the same angle of rotation. Since the adjusting nuts 61 are in screw-engaged with the corresponding first threaded portions, the adjusting nuts 61 move in the axial direction of the tie bars 34 by an amount corresponding to the angle of rotation of the adjusting nuts 61. As a result, the toggle support 32 can be advanced and retreated in relation to the upper platen 31.

Meanwhile, since the tie bars 34 hold the toggle support 32, the lower platen 35, and the toggle mechanism 37 under the upper platen 31 such that these members hang on the tie bars 34, if the lower ends of the tie bars 34 are positionally unstable, mold closing, mold clamping, and mold opening cannot be smoothly performed. In order to cope with this problem, a deflection-restricting member 112 is attached to the base 12. The deflection-restricting member 112 has deflection-restricting portions 113 which project upward at positions corresponding to the tie bars 34. Each of the deflection-restricting portions 113 has a slide hole 114 for slidingly receiving the corresponding deflection-restricted portion 34d, and the lower end of the deflection-restricted portion 34d is fitted into the corresponding slide hole 114. Accordingly, the upper ends of the tie bars 34 are fixed to the upper frame 13 via the upper platen 31, and the lower ends of the tie bars 34 are held through insertion into the deflection-restricting portions 113. Thus, the tie bars 34 can stably extend between the upper frame 13 and the base 12. As a result, the lower platen 35 can be stably advanced and retreated along the tie bars 34, so that mold closing, mold clamping, and mold opening can be smoothly performed. Notably, the deflection-restricted portions 34d and the deflection-restricting portions 113 constitute a deflection-restricting apparatus.

When maintenance is to be performed with respect to the rotation transmission system 39, which is a drive mechanism for the mold-clamping apparatus 23, the ball screw 101 coupled with the rotation transmission system 39, and the like, the toggle support 32 is moved by driving of the mold-thickness motor 62, thereby enabling easy access to the rotation transmission system 39, the ball screw 101, and the like.

Next, the operation of the vertical molding machine will be described.

In a metering step of the injection apparatus 21 having the above-mentioned configuration, the metering motor 54 is driven, and the rotation of the metering motor 54 is transmitted to the screw shaft via the rotation transmission system 52, thereby rotating the screw. As a result, a resin fed from the hopper is melted within the heating cylinder 45 through application of heat. The molten resin moves frontward and is stored ahead of the screw. In the course of this operation, the screw is retreated to a predetermined position.

Next, when the mold-clamping motor 38 is driven, the rotation of the mold-clamping motor 38 is transmitted to the ball screw shaft 125 via the rotation transmission system 39. As a result, the ball nut 126 is advanced and retreated, and thus the crosshead 102 is advanced and retreated. Advancement of the crosshead 102 extends the toggle mechanism 37, thereby advancing the lower platen 35 for performing mold closing. The lower mold 43 is brought in contact with the upper mold 41. Subsequently, further driving of the mold-clamping motor 38 generates a mold-clamping force in the toggle mechanism 37. The mold-clamping force presses the lower mold 43 against the upper mold 41; thereby forming a cavity between the upper mold 41 and the lower mold 43.

In an injection step, the injection nozzle 46 is pressed against the upper mold 41, thereby performing a nozzle touch; the injection cylinders 56 are driven so as to advance the screw; the advancement of the screw causes the resin stored ahead of the screw to be injected into the cavity from the injection nozzle 46 so as to fill the cavity; and the resin within the cavity is cooled to set, thereby yielding a molded product.

Next, retreat of the crosshead 102 bends the toggle mechanism 37, thereby retreating the lower platen 35 for performing mold opening.

The crosshead 102 has an attachment portion 141 projecting upward. An ejector rod 143 is attached to the attachment portion 141. Accordingly, when the lower platen 35 moves downward in association with mold opening, the ejector rod 143 relatively moves upward and is fitted into a hole formed in the lower platen 35. As a result, an unillustrated ejector pin disposed above the ejector rod 143 moves upward so as to project upward from the lower mold 43, thereby pushing out the molded product. Notably, the ejector rod 143, the ejector pin, etc. constitute an ejector apparatus.

In the present embodiment, the upper platen 31 is fixed to the upper frame 13 at the upper end of the frame 11; the upper mold 41 is attached to the upper platen 31; and the injection nozzle 46 is pressed against a side face of the upper mold 41 for injection of a resin therefrom. Thus, the injection apparatus 21 is disposed adjacent to the upper mold 41. Therefore, there is no need to move the injection apparatus 21 in a vertical direction, whereby the mechanisms of the vertical molding machine can be simplified, and the cost of the vertical molding machine can be lowered.

Since there is no need to dispose the injection apparatus 21 on the upper platen 31, the size of the vertical molding machine can be reduced.

In the present embodiment, when the lower platen 35 and the lower mold 43 fall down due to gravity, the mold apparatus is opened so that the safety of the vertical molding machine can be improved.

The present invention is not limited to the above-described embodiment. Numerous modifications and variations of the present invention are possible in light of the spirit of the present invention, and they are not excluded from the scope of the present invention.

### INDUSTRIAL APPLICABILITY

The present invention can be applied to an injection molding machine for producing molded products.

## Claims

1. A vertical molding machine comprising:
(a) a frame;
(b) an upper platen fixed to the frame and having an upper mold mounted thereon;
(c) a connection member disposed in such a manner as to extend downward from the upper platen;
(d) a lower base member held by the connection member under the upper platen;
(e) a lower platen disposed in a manner capable of advancing and retreating along the connection member, and having a lower mold mounted thereon; and
(f) a mold-clamping drive section which advances and retreats the lower platen so as to bring the lower mold in contact with the upper mold or move the lower mold away from the upper mold for effecting mold closing, mold clamping, and mold opening; wherein
(g) the lower base member is moved downward by a mold-clamping force generated by the drive section at the time of mold clamping.

2. A vertical molding machine according to claim 1, wherein a toggle mechanism is disposed between the lower base member and the lower platen.

3. A vertical molding machine according to claim 1, further comprising a deflection-restricting apparatus which prevents deflection of a lower end of the connection member.

4. A vertical molding machine according to claim 1, wherein a mold-thickness-adjusting apparatus is disposed on the upper platen.

5. A vertical molding machine according to claim 1, wherein an injection apparatus is in nozzle touch with a side face of the upper mold.

6. A vertical molding machine according to claim 1, wherein the upper mold has a hot-runner structure.

7. A vertical molding machine according to claim 1, wherein a mold apparatus comprising the upper mold and the lower mold is disposed frontward of the injection apparatus and includes an adapter having a shape resembling the letter "L" and which charges a molding material into a cavity from above.

8. A molding method for use with a vertical molding machine which comprises a frame, an upper platen fixed to the frame and having an upper mold mounted thereon, a connection member disposed in such a manner as to extend downward from the upper platen, a lower base member held by the connection member under the upper platen, a lower platen disposed in a manner capable of advancing and retreating along the connection member and having a lower mold mounted thereon, and a mold-clamping drive section which advances and retreats the lower platen so as to bring the lower mold in contact with the upper mold or move the lower mold away from the upper mold for effecting mold closing, mold clamping, and mold opening, the method comprising:
(a) advancing and retreating the lower platen so as to bring the lower mold in contact with the upper mold or move the lower mold away from the upper mold for effecting mold closing, mold clamping, and mold opening, and
(b) moving the lower base member downward by a mold-clamping force generated by the drive section at the time of mold clamping.
